# EUROPEAN PATENT SPECIFICATION

(11) **EP 1 035 134 B1**
(45) Date of publication and mention of the grant of the patent: **08.06.2005**
(21) Application number: 99103926.4
(22) Date of filing: 05.03.1999
(51) Int. Cl.: C08B 11/20, C09D 7/00

(54) **Cellulose-based associative thickeners having a high ICI viscosity**
Auf Cellulosebasis assoziative Verdickungsmittel mit einer hohen ICI-Viskosität
Epaississants associatifs à base de cellulose ayant une haute viscosité ICI

(43) Date of publication of application: 13.09.2000
(73) Proprietor: HERCULES INCORPORATED, Wilmington Delaware 19894-0001 (US)
(72) Inventor: Kroon, Gijsbert, 3371 BW Hardinxveld-Giessendam (NL); Hofman, Hans, 3315 HE Dordrecht (NL)
(74) Representative: Best, Michael, Dr.

(56) References cited:
- EP-A- 0 426 086
- EP-A- 0 566 911
- US-A- 4 826 970
- US-A- 4 902 733
- US-A- 4 904 772
- US-A- 5 002 985
- US-A- 5 140 099

## Description

The present invention relates to specific hydrophobically modified cellulose derivatives which are excellent associative thickeners, particularly when used in aqueous protective coating compositions. Aqueous protective coating compositions containing the specific hydrophobically modified cellulose derivatives of the present invention do not only have excellent levelling properties but also an increased ICI viscosity.

Associative thickeners, which generally are water soluble polymers, are widely used as additives in water-based systems. Thickeners increase and maintain the viscosity at required levels under specific processing conditions and end-use situations. In particular, thickeners are useful in all kinds of coatings such as decorative and protective coatings and in paper coatings but also in cosmetics and personal care items, detergents, pharmaceuticals, adhesives and sealants, agricultural formulations and petroleum drilling fluids.

Associative thickeners are used as rheology modifiers for water-based protective coating compositions.

Water-based protective coating compositions are commonly known as latex paints or dispersion paints and have been known for a considerable number of years. The adjustment of the rheology properties of such an aqueous protective coating composition is a challenging field, since the coating composition needs not only to provide good levelling (such as leneta levelling and brush levelling) and an excellent sag resistance, but rather the coating compositions should also have an ICI viscosity which is neither too low nor too high in order to allow an easy application.

It is well known to the person skilled in the art that various thickening agents can be added to aqueous protective coating compositions in order to change the rheology properties of the composition. Many compounds e.g. starch, methyl cellulose, hydroxyethyl cellulose, treated bentonids, hydroxyalkyl guar and the like as well as a number of synthetic thickeners have been used as thickening agents in the past. However, most of these known thickening agents do not provide a sufficiently good leneta levelling, brush levelling or sag resistance and those thickeners which have a reasonable leneta levelling often do not have a satisfactory ICI viscosity.

The European patent application EP-A-0 426 086 discloses alkylaryl hydrophobically modified hydroxyethylcellulose, methylcellulose and hydroxypropylcellulose which are supposed to give better levelling properties in latex paint formulations than those obtained with long chain alkyl substituted celluose ethers of the prior art, without sacrificing the other good performance properties in latex paint applications.

US patent US 4,826,970 discloses anionic, water-soluble cellulose ether derivatives, in particular carboxymethyl hydrophobically modified hydroxyethylcellulose, which are useful as thickeners in aqueous solutions, e.g. water-based protective coating compositions such as latex paints as well as aqueous solutions including water-based protective coating compositions containing these ternary cellulose ethers as thickeners and protective colloids. The cellulose ether derivatives are characterized in that they have a Brookfield LVF Viscosity of about 5 centipoise to about 60,000 centipoise in a 1 wt.-% solution.

European patent application EP-A-0 566 911 discloses aqueous protective coating compositions containing an associative thickener having a molecular weight of 10 000 to 300 000. The associative thickener can be a hydrophobically modified cellulose derivative. While the thickeners disclosed in EP-A-0 566 911 provide aqueous protective coating compositions having excellent leneta levelling, excellent brush levelling and excellent sag resistance, there exists a problem that the associative thickeners specifically disclosed in EP-A 0 566 911 cannot provide a high ICI viscosity, at least not if they are employed in economically relevant concentrations. Thus, aqueous protective coating compositions comprising not more than 1.5 wt.-% of a hydrophobically modified cellulose derivative specifically disclosed in EP-A 0 566 911 do not have a satisfactory ICI viscosity in combination with excellent levelling properties.

It is an object of the present invention to provide associative thickeners, particularly for use in aqueous protective coating compositions, which, at a low concentration, do not only provide an excellent levelling but also an improved ICI viscosity. A further object of the present invention is to avoid problems which occur with prior art associative thickeners.

These objects are achieved on the basis of the unexpected finding that some associative thickeners which are encompassed by the broad definitions of European patent application EP-A 0 566 911 provide a significantly improved ICI viscosity compared to the associative thickeners specifically disclosed in EP-A 0 566 911, while the levelling properties provided by these new associative thickeners are as good as or better than the corresponding levelling properties provided by the associative thickeners specifically disclosed in EP-A 0 566 911.

The present invention provides a hydrophobically modified cellulose derivative selected from the group consisting of a hydrophobically modified hydroxyethyl cellulose, a hydrophobically modified methylhydroxyethyl cellulose and a hydrophobically modified ethylhydroxyethyl cellulose, wherein the molecular weight of the cellulose backbone of the hydrophobically modified cellulose derivative (without substitution) M_{W} is 5000 to 50 000, the hydroxyethyl MS is 2.5 to 5.0, the hydrophobe is a C₁₀-C₂₀-alkyl alone or in combination with C₁-C₆-alkyl, the amount of C₁₀-C₂₀-alkyl substitution is between 0.3 and 6.0 wt.-%, characterized in that the molecular weight and the kind and amount of hydrophobe substitution of the hydrophobically modified cellulose derivative is selected so that a styrene/acrylic-based semi-gloss paint containing not more than 1.5 wt.-% of the hydrophobically modified cellulose derivative and having a leneta levelling of at least 9 has an ICI viscosity of at least 120 mPas.

In one embodiment the molecular weight and the kind and amount of hydrophobe substitution of the hydrophobically modified cellulose derivative is selected so that an aqueous protective coating composition containing the hydrophobically modified cellulose derivative and having a leneta levelling of at least 9 has an ICI viscosity which is at least 20 mPas higher than that provided by a C₁₆ modified hydroxyethyl cellulose with a hydrophobe wt.-% of 1.02, a hydroxyethyl MS of 3.8 and a molecular weight M_{W} of 36 000 with substitution.

The present invention also provides aqueous protective coating compositions containing a hydrophobically modified cellulose derivative as defined above. Furthermore, the present invention provides the use of such a hydrophobically modified cellulose derivative for the preparation of a aqueous protective coating composition and products coated with such an aqueous protective coating composition.

If not otherwise stated ("with substitution"), molecular weights of cellulose derivatives referred to in this specification are based on the cellulose backbone of the cellulose derivative without any ether groups (hydroxyethyl groups) or hydrophobe groups.

The hydrophobically modified cellulose derivatives of the invention can be prepared as described in detail in EP-A 0 566 911. Examples of C₁₀- to C₂₀-alkyl substituents which can be used according to the present invention are also disclosed in EP-A 0 566 911.

EP-A 0 566 911 specifically discloses a C₁₆-alkyl modified hydroxyethyl cellulose with a hydrophobe weight percent of 1.02 and a molecular weight M_{W} of 36 000. An aqueous protective coating composition containing such a hydrophobically modified cellulose derivative has an excellent leneta levelling of about 10, however, for some applications the ICI viscosity of the aqueous protective coating composition is too low. For example, such a hydrophobically modified cellulose derivative, if used as an associative thickener in a styrene/acrylic-based semi-gloss paint e.g. as defined in reference example 1, can only provide an ICI viscosity of 100 mPas.

Unexpectedly, it was found that by carefully adjusting the molecular weight, the hydrophobe content and the type of hydrophobe of some hydrophobically modified cellulose derivatives, associative thickeners can be provided which, when used in aqueous protective coating compositions, do not only provide an excellent leneta levelling of at least 9 but also an ICI viscosity of at least 120 mPas.

In particular, a styrene/acrylic-based semi-gloss paint, e.g. the paint defined in reference example 1, containing an associative thickener according to the present invention has an ICI viscosity of at least 120 mPas, preferably of at least 130 mPas. The same paint containing the thickener known from EP-A 0 566 911 has an ICI viscosity of only 100 mPas.

The leneta levelling of the aqueous protective coating compositions of the invention is at least 9, preferably more than 9 and most preferably about 10.

Based on the disclosure of the invention, a skilled person can easily adjust the molecular weight and the kind and amount of hydrophobe substitution of the hydrophobically modified cellulose derivative in order to achieve the required ICI viscosity and leneta levelling.

The most preferred associative thickener of the present invention is a hydrophobically modified hydroxyethyl cellulose. The hydrophobe substitution is preferably a C₁₂-alkyl substitution or most preferably a C₁₆-alkyl substitution. If the hydrophobe substitution is a C₁₂-alkyl substitution, it is possible that a minor amount of C₁-C₆-alkyl, preferably C₄-alkyl substitution is also present.

If the hydrophobe substitution is a C₁₆-alkyl substitution, the C₁₆-alkyl substitution is preferably present in an amount of 0.3 to 1.0 wt.-% and the hydroxyethyl MS of the hydrophobically modified cellulose derivative, preferably the hydrophobically modified hydroxyethyl cellulose, is preferably 2.5 to 5.0. Such a particularly preferred hydrophobically modified cellulose derivative, preferably the hydrophobically modified hydroxyethyl cellulose, has a molecular weight (without substitution) M_{W} of 21 000 to 46 000 (roughly corresponding to M_{W} of 42 000 to 92 000 of the modified product).

If the hydrophobe substitution is a C₁₆-alkyl substitution, only a very minor amount of C₁-C₆-alkyl substitution should be present, preferably no C₁-C₆-alkyl substitution is present.

It is also preferred that the hydrophobe substitution of the hydrophobically substituted cellulose derivative, preferably the hydrophobically modified hydroxyethyl cellulose, is a C₁₂ hydrophobe substitution. In this case, the amount of hydrophobe substitution is preferably 2.5 to 6.0 wt.-%. The hydrophobically modified cellulose derivative, preferably the hydrophobically modified hydroxyethyl cellulose, has a preferred hydroxyethyl MS of 3.5 to 4.1 and a molecular weight (without substitution) M_{W} of 12 000 to 24 000 (roughly corresponding to M_{W} of 20 000 to 60 000 of the modified product).

Preferably, the C₁₂-alkyl substituted cellulose derivative, preferably the hydrophobically modified hydroxyethyl cellulose as defined above, has no additional C₁-C₆-alkyl substitution, however, a minor amount of C₁-C₆-alkyl substitution can be present, preferably a C₄-alkyl substitution. If an additional C₁-C₆ substitution, preferably an additional C₄ substitution is present, the molecular weight of the cellulose (without substitution) is slightly lower than in the case where no C₁-C₆-alkyl substitution is present and is in a range of M_{W} = 10 000 to 20 000. Furthermore, the C₁-C₆-alkyl substitution, preferably the C₄-alkyl substitution is only present in an amount of not more than 0.10 wt.-%, preferably in an amount of 0.05 to 0.10 wt.-%. The C₁₂-alkyl substitution is then 3.5 to 5.5 wt.-% and the hydroxyethyl MS is 3.0 to 4.0.

If the hydrophobe substitution is not a C₁₂- or C₁₆-alkyl substitution but e.g. is a C₁₀-, C₁₈- or C₂₀-alkyl substitution, the corresponding amount of the hydrophobe and the molecular weight of the cellulose for the corresponding hydrophobically modified cellulose derivative to fall within the scope of the present invention can easily be determined by a skilled person on the basis of the information given in this specification.

The hydrophobically modified cellulose derivatives of the present invention can be used alone but they can also be used in combination with other associative thickeners, preferably with hydrophobically modified polyethylene glycols such as the hydrophobically modified poly(acetal-polyethers) disclosed in US-A 5,574,127 or with the hydrophobically modified ethoxylated urethane block copolymers disclosed in US-A 4,079,028, US-A 4,155,892 and US-A 5,281,654 and being widely commercially available. Furthermore, the hydrophobically modified cellulose derivatives of the present invention can also be used with hydrophobically modified alkali-swellable emulsions disclosed in "Alkali-swellable and alkali-soluble thickener technology", a review by Gregory D. Shay in polymers in aqueous media edited by J. Edward Glass, 1989, ACS 223, page 457-494.

The hydrophobically modified cellulose derivatives of the present invention can be used in all kinds of aqueous protective coating compositions. The binder of the aqueous protective coating compositions of the present invention usually are polymeric dispersions (latex) made by radical polymerizations through emulsion polymerization process. In the emulsion polymerization process ethylenically unsaturated monomers are used such as acrylic acid, methacrylic acid, butylacrylate, methylacrylate, acrylic esters, styrene and mixtures thereof. Other monomers which can be used for preparing such polymeric dispersions are vinylesters, vinylidene halides, N-vinylpyrolidone, ethylene, C₃ or greater alpha-olefins, allyl amines, allyl esters of saturated monocarboxylic acids and amides thereof and mixtures thereof. Furthermore, vinylformate, vinylacetate, vinylpropionate, vinylversatate, etc. can be used. In a particularly preferred embodiment, the aqueous protective coating compositions of the present invention are based on acrylic latexes, styrene acrylic latexes and vinylacetate-acrylates.

The aqueous protective coating compositions of the invention are preferably high gloss paint, egg shell paints and semi-gloss paints.

The following examples and reference examples are illustrative only.

### Reference example 1

73.3 parts by weight water, 21.5 parts by weight propylene glycol, 2 parts by weight of an aminopropanol acting as pH stabilizer (AMP 90), 2 parts by weight of sodium hexamethaphosphate (Calgon N), 2 parts by weight of an acrylic-based anionic dispersant (Byk 154), 5 parts by weight of a defoamer (Dehydran 1293), hydrophobically modified cellulose derivative as shown in the examples, 190 parts by weight titanium dioxide (Tioxide R-HD2) and 90 parts by weight calcium carbonate (Omyacarb Extra CL) were dispersed for 15 minutes at 4000 rpm. Then 6 parts by weight of a surfactant (Surfynol 104E), 472 parts by weight of a styrene/acrylic latex acting as binder (Neocryl XK-90), ammonia up to a pH-value of 9.4, 9 parts by weight Dehydran 1293, 60.7 parts by weight diethylene glycol, 7 parts by weight Byk 154 and 22.4 parts by weight of water were added to produce semi-gloss paint No. 1.

### Reference example 2

29.6 parts by weight propylene glycol, 55.6 parts by weight water, 2.0 parts by weight Calgon N, 2.0 parts by weight Byk 154, 0.8 parts by weight of a chloroacetamide preservative (CA 24), 4.0 parts by weight of a defoamer (Byk 026), 0.8 parts by weight ammonia, hydrophobically modified cellulose derivative as shown in the examples and 211.0 parts by weight Tioxide R-HD2 were dispersed for 15 minutes at 4000 rpm. Then 553.1 parts by weight of a styrene/acrylic latex based on styrene-2-ethyl/hexylacrylate (Primal HG 74 D), 34.6 parts by weight Texanol (ester alcohol, coalescing agent), 16.5 parts by weight of a glycolester-based cosolvent (Dowanol PM), 1.0 parts by weight Byk 026 and 64.0 parts by weight water was added to provide gloss paint No. 2.

### Reference example 3

100 parts by weight of water, 21.5 parts by weight of propylene glycol, 2 parts by weight of AMP 90, 6 parts by weight Dispex GA 40 (dispersant), 5 parts by weight Dehydran 1293, hydrophobically modified cellulose thickener as shown in the examples, 160 parts by weight Tioxide R-HD2 and 170 parts by weight Omyacarb Extra CL were dispersed for 15 minutes at 4000 rpm. Then 6 parts by weight Surfynol 104E (defoamer/stabilizer which is a 50% nonionic surfactant in ethylene glycol), 390 parts by weight Neocryl XK-90 (binder/styrene-acrylic latex), ammonia up to a pH-value of 9.4, 9 parts by weight Dehydran 1293, 60.7 parts by weight diethylene glycol and 30.7 parts by weight of water were mixed to provide egg shell paint No. 3.

In the following examples, aqueous protective coating compositions as shown in tables 1 to 3 have been employed and the levelling, the sag resistance and viscosity properties have been measured.

In the tables, the ICI viscosity is the viscosity determined with ICI cone and plate viscosimeter which measures the viscosity at a fixed shear rate of 10 000 s⁻¹. The viscosity can be read directed from the scale in poise. This viscosity indicates the behavior of the composition under application by brush (or in other words the "brush drag"), roller and spraying, so under high shear.

The Stormer viscosity is measured with a digital stormer viscosimeter from which the reading indicates directly the viscosity in Krebs Unit (KUs). This viscosity is indicating the can viscosity.

For spray applied coatings the sag resistance is measured by spraying the paint including the combination of thickeners onto a vertical substrate as thick as possible so at the limit of sagging. Then the layer thickness is measured. The layer thickness depends on how the structural recovery of the paint develops in time and to what level. It is a rheology phenomenon and has two components in it, the visco elasticity and time dependency. This is influenced by the structure of the polymer coil in solution.

Generally, sag resistance is measured by applying the paint with an applicator bar having different opening sizes in a range of 50 to 300 microns. The substrate with applied paint varying in layer thickness is then put vertical and sag resistance is defined as the maximum layer thickness at which sagging is not yet occurring.

In all examples, the amount of thickeners in the composition was adjusted to achieve the same Stormer viscosity of about 100 KU. In some examples, the exact Stormer viscosity is indicated. If no Stormer viscosity is indicated, the Stormer viscosity was about 100 KU. In the examples, the amount of thickener is indicated as wt.-% of active thickener (dry basis) based on the weight of the complete composition.

### Example 1

Semi-gloss paint No. 1 of reference example 1 is prepared with several C₁₆-alkyl modified hydroxyethyl celluloses as shown in table 1. The C₁₆-alkyl modified hydroxyethyl cellulose used in run No. C2 is a hydrophobically modified hydroxyethyl cellulose as disclosed in the examples of EP-A 0 566 911.

It can be seen that only the thickeners according to the invention employed in run No. 13, 15, 16, 17, 21, 22, 23 and 24 provide aqueous protective coating compositions having an excellent levelling and an excellent ICI viscosity at a concentration of not more than 1.5 wt.-%. All other associative thickeners which do not fall within the scope of the present invention either have an insufficient ICI viscosity or too low a leneta levelling or too high an amount is necessary to achieve the required leneta levelling and ICI viscosity.

**Table 1**

| Run No. | HE-MS | C 16, wt-% | M_{W} cellulose backbone | Amount of thickener wt.-% | Stormer viscosity initial KU | ICI viscosity mPas | Levelling Leneta |
|---|---|---|---|---|---|---|---|
| C1 | 3.8 | 1.5 | 25000 | 0.65 | 100 | 100 | ∼10 |
| C2 | 3.8 | 1.02 | 36000 (with substitution) | 0.85 | 99 | 100 | 10 |
| 1 | 4.17 | 0.89 | 114000 | 0.43 | 100 | 100 | 3 |
| 2 | 4.07 | 0.73 | 118000 | 0.44 | 98 | 100 | 3 |
| 3 | 4.12 | 0.49 | 112000 | 0.56 | 94 | 100 | 3 |
| 4 | 4.12 | 0.49 | 96000 | 0.56 | 94 | 100 | 4 |
| 5 | 4.17 | 0.89 | 104000 | 0.47 | 98 | 110 | 4 |
| 6 | 4.13 | 0.34 | 91000 | 0.76 | 100 | 110 | 5 |
| 7 | 4.13 | 0.34 | 50000 | 0.79 | 95 | 110 | 9 |
| 8 | 4.05 | 0.55 | 13000 | 1.89 | 88 | 110 | 10 |
| 9 | 4.13 | 0.34 | 81000 | 0.85 | 100 | 115 | 4 |
| 10 | 4.05 | 0.55 | 89000 | 0.57 | 99 | 120 | 4 |
| 11 | 4.07 | 0.73 | 77000 | 0.58 | 98 | 120 | 7 |
| 12 | 4.05 | 0.55 | 37000 | 0.94 | 96 | 120 | 7 |
| 13 | 4.13 | 0.34 | 40000 | 1.35 | 98 | 120 | 10 |
| 14 | 4.13 | 0.34 | 29000 | 1.75 | 99 | 120 | 10 |
| 15 | 4.12 | 0.49 | 37000 | 1.11 | 93 | 125 | 10 |
| 16 | 4.07 | 0.73 | 46000 | 0.73 | 98 | 130 | 10 |
| 17 | 4.17 | 0.89 | 21000 | 0.87 | 100 | 130 | 10 |
| 18 | 4.12 | 0.49 | 46000 | 0.94 | 98 | 130 | 8 |
| 19 | 4.05 | 0.55 | 51000 | 0.88 | 98 | 135 | 7 |
| 20 | 4.05 | 0.55 | 59000 | 0.85 | 99 | 140 | 7 |
| 21 | 4.17 | 0.89 | 29000 | 0.91 | 99 | 140 | 10 |
| 22 | 4.12 | 0.49 | 35000 | 1.31 | 100 | 140 | 10 |
| 23 | 4.07 | 0.73 | 22000 | 1.43 | 97 | 140 | 10 |
| 24 | 4.05 | 0.55 | 21000 | 1.45 | 96 | 140 | 10 |
| 25 | 4.12 | 0.49 | 29000 | 1.75 | 98 | 140 | 10 |
| 26 | 4.07 | 0.73 | 14000 | 2.05 | 98 | 140 | 10 |
| 27 | 4.17 | 0.89 | 11000 | 2.21 | 102 | 145 | 10 |
| 28 | 4.13 | 0.34 | 22000 | 2.70 | 104 | 145 | 9 |
| 29 | 4.12 | 0.49 | 21000 | 3.00 | 100 | 150 | 10 |
| 30 | 4.07 | 0.73 | 8000 | 3.18 | 98 | 150 | 10 |
| 31 | 4.13 | 0.34 | 19000 | 3.71 | 98 | 150 | 7 |
| 32 | 4.05 | 0.55 | 10000 | 3.14 | 98 | 155 | 8 |
| 33 | 4.17 | 0.89 | 11000 | 3.29 | 103 | 165 | 7 |
| 34 | 4.12 | 0.49 | 17000 | 3.71 | 99 | 165 | 7 |

### Example 2

Semi-gloss paint No. 1 of reference example 1 is prepared with several C12-alkyl modified hydroxyethyl celluloses. The specification of the hydrophobically modified hydroxyethyl cellulose and the physical properties of the obtained paints are summarized in table 2 below.

It can be seen that only the aqueous coating compositions according to the invention employed in runs No. 2, 3, 5, 6, 8 and 9 provide an excellent leneta levelling combined with a very good ICI viscosity. The hydrophobically modified cellulose derivatives and the corresponding aqueous protective coating compositions employed in the other runs are thus not within the scope of the present invention.

**Table 2**

| Run No. | HE-MS | C12, wt.-% | M_{W} cellulose backbone | Amount of thickener wt.-% | ICI mPas | Levelling Leneta | Levelling ASTM | Sag Resistance |
|---|---|---|---|---|---|---|---|---|
| 1 | 6.09 | 2.84 | 46000 | 0.85 | 130 | 2 | 1 | 300 |
| 2 | 4.11 | 4.15 | 14000 | 0.99 | 130 | ∼10 | 5 | 200 |
| 3 | 3.55 | 5.34 | 24000 | 1.13 | 130 | ∼10 | 6-7 | 150 |
| 4 | 4.86 | 2.33 | 33000 | 1.23 | 135 | 1 | 0 | 300 |
| 5 | 3.57 | 3.86 | 21000 | 1.00 | 135 | 10 | 5 | 300 |
| 6 | 3.63 | 2.70 | 22000 | 1.07 | 140 | 10 | 4 | 300 |
| 7 | 3.57 | 3.86 | 19000 | 1.10 | 140 | 2 | 3 | 300 |
| 8 | 3.57 | 3.86 | 12000 | 1.45 | 150 | 10 | 4-5 | 300 |
| 9 | 3.57 | 3.86 | 18000 | 1.17 | 150 | 10 | 4 | 300 |
| 10 | 3.57 | 3.86 | 11000 | 1.90 | 155 | 10 | 5-6 | 275 |
| 11 | 4.11 | 4.15 | 5000 | 1.73 | 160 | 8 | 6 | 225 |
| 12 | 3.63 | 2.70 | 16000 | 1.69 | 165 | 2 | 3 | 300 |
| 13 | 3.57 | 3.86 | 8000 | 2.30 | 170 | 5 | 5-6 | 300 |
| 14 | 3.63 | 2.70 | 4000 | 3.30 | 180 | 3 | 3 | 300 |
| 15 | 3.63 | 2.70 | 9000 | 2.70 | 180 | 1 | 3 | 300 |
| 16 | 3.55 | 5.34 | 8000 | 1.82 | 180 | 4 | 4-5 | 300 |

### Example 3

Semi-gloss paint No. 1 of reference example 1 is prepared with several hydrophobically modified hydroxyethyl celluloses, wherein the hydrophobe modification was a combined C₄-/C₁₂-alkyl substitution. It can be seen that only runs No. 10 and 23 have an excellent leneta levelling in combination with an improved ICI viscosity, even at a thickener content of not more than 1.5 wt.-%. All associative thickeners employed in the other runs either do not have a sufficient leneta levelling or too low an ICI viscosity or too high an amount of thickener is required to achieve a good leneta levelling and ICI viscosity.

The exact composition of the associative thickeners employed and the physical properties of the corresponding semi-gloss paints are summarized in table 3 below.

**Table 3**

| Run No. | HE-MS | C4 wt.-% | C12 wt.-% | M_{W} cellulose backbone | Amount of thickener wt.-% | ICI mPas | Levelling Leneta | Levelling ASTM | Sag Resistance |
|---|---|---|---|---|---|---|---|---|---|
| 1 | 3.27 | 0.071 | 5.10 | 10000 | 0.85 | 55 | 10 | ∼8 | <75 |
| 2 | 3.27 | 0.071 | 5.10 | 27000 | 0.85 | 60 | 10 | 7 | 75 |
| 3 | 3.61 | 0.074 | 3.92 | 25000 | 0.85 | 70 | 10 | ∼8 | 75 |
| 4 | 3.61 | 0.074 | 3.92 | 19000 | 0.85 | 70 | 10 | 7 | 75 |
| 5 | 3.42 | 0.360 | 2.02 | 53000 | 0.85 | 80 | ∼10 | 6 | 100 |
| 6 | 3.42 | 0.360 | 2.02 | 51000 | 0.85 | 80 | 10 | 6 | 100 |
| 7 | 3.43 | 0.290 | 2.07 | 34000 | 0.85 | 85 | 8 | 5 | 225 |
| 8 | 3.56 | 0.190 | 1.97 | 49000 | 0.73 | 90 | 2 | 3 | 300 |
| 9 | 3.42 | 0.360 | 2.02 | 38000 | 1.02 | 90 | 9 | ∼6 | 175 |
| 10 | 3.56 | 0.190 | 1.97 | 40000 | 0.73 | 100 | 2 | 1 | 300 |
| 11 | 3.42 | 0.360 | 2.02 | 43000 | 1.14 | 100 | 8 | ∼6 | 175 |
| 12 | 3.43 | 0.290 | 2.07 | 37000 | 0.98 | 100 | 3 | ∼4 | 300 |
| 13 | 3.43 | 0.290 | 2.07 | 44000 | 0.85 | 100 | 3 | 3 | 300 |
| 14 | 2.61 | 0.031 | 1.85 | insol. 10000 | 1.27 | 110 | 10 | 6 | 125 |
| 15 | 3.56 | 0.190 | 1.97 | 29000 | 0.89 | 110 | 2 | 1 | 300 |
| 16 | 3.43 | 0.290 | 2.07 | 43000 | 0.95 | 110 | 3 | ∼3 | 300 |
| 17 | 3.43 | 0.290 | 2.07 | 37000 | 0.98 | 110 | 3 | 3 | 300 |
| 18 | 3.56 | 0.190 | 1.97 | 35000 | 0.92 | 115 | 1 | 0 | 300 |
| 19 | 3.43 | 0.290 | 2.07 | 46000 | 1.01 | 120 | 1 | 2 | 300 |
| 20 | 3.61 | 0.074 | 3.92 | 17000 | 1.27 | 120 | >9 | 6 | 150 |
| 21 | 3.56 | 0.190 | 1.97 | 28000 | 1.38 | 125 | 1 | 0 | 300 |
| 22 | 3.27 | 0.071 | 5.10 | 7000 | 1.56 | 135 | 9 | ∼6 | 150 |
| 23 | 3.61 | 0.074 | 3.92 | 14000 | 1.42 | 140 | 10 | 6 | 150 |
| 24 | 3.61 | 0.074 | 3.92 | 7000 | 1.72 | 150 | 10 | ∼8 | 125 |
| 25 | 3.56 | 0.190 | 1.97 | 12000 | 1.59 | 160 | 1 | 0 | 300 |

### Example 4

High gloss paint No. 2 of reference example 2 was prepared with the associative thickeners of run No. C1, C2 and 24 of table 1 of example 1. The high gloss paint prepared with the associative thickener of run No. C1 at a concentration of 0.64 wt.-% had an excellent leneta levelling of 10 but an ICI viscosity of only 60 mPas. The high gloss paint prepared with the associative thickener of run No. C2 at a concentration of 0.74 wt.-% also had an excellent leneta levelling of 10, but again an ICI viscosity of only 60 mPas. Contrary thereto, the high gloss paint containing the associative thickener of run No. 24 of table 1 of example 1 at a concentration of 1.17 wt.-% showed a leneta levelling of 10 but an ICI viscosity of 105 mPas.

### Example 5

Egg shell paint No. 3 of reference example 3 was prepared with the associative thickeners of runs No. C1, C2 and 24 of table 1 of example 1. The egg shell paint containing the hydrophobically modified hydroxyethyl cellulose of run No. C1 in an amount of 0.71 wt.-% showed an excellent leneta levelling of 10 but an ICI viscosity of only 80 mPas. The egg shell paint containing the hydrophobically modified hydroxyethyl cellulose of run No. C2 in an amount of 0.98 wt.-% also showed an excellent leneta levelling of 10, but again an ICI viscosity of only 85 mPas. Contrary thereto, the egg shell paint prepared with the hydrophobically modified hydroxyethyl cellulose of run No. 24 of table 1 of example 1 at a concentration of 1.34 wt.-% had a leneta levelling of 10 but a significantly increased ICI viscosity of 130 mPas.

## Claims

1. Hydrophobically modified cellulose derivative selected from the group consisting of a hydrophobically modified hydroxyethyl cellulose, a hydrophobically modified methylhydroxyethyl cellulose and a hydrophobically modified ethylhydroxyethyl cellulose, wherein the molecular weight of the cellulose backbone of the hydrophobically modified cellulose derivative (without substitution) M_{W} is 5000 to 50 000, the hydroxyethyl MS is 2.5 to 5.0, the hydrophobe is a C₁₀-C₂₀-alkyl alone or in combination with C₁-C₆-alkyl, the amount of C₁₀-C₂₀-alkyl substitution is between 0.3 and 6.0 wt.-%, **characterized in that** the molecular weight and the kind and amount of hydrophobe substitution of the hydrophobically modified cellulose derivative is selected so that a styrene/acrylic-based semi-gloss paint containing not more than 1.5 wt.-% of the hydrophobically modified cellulose derivative and having a leneta levelling of at least 9 has an ICI viscosity of at least 120 mPas.

2. Hydrophobically modified cellulose derivative according to claim 1, wherein the hydrophobically modified cellulose derivative is a hydrophobically modified hydroxyethyl cellulose, wherein the hydroxyethyl MS is 2.5 to 5.0, the hydrophobe substitution is a C₁₆-alkyl substitution which is present in an amount of 0.3 to 1.0 wt.-% and wherein the molecular weight (without substitution) M_{W} is 21 000 to 46 000.

3. Hydrophobically modified cellulose derivative according to claim 1, wherein the hydrophobically modified cellulose derivative is a hydrophobically modified hydroxyethyl cellulose, wherein the hydroxyethyl MS is 3.5 to 4.1, the hydrophobe substitution is a C₁₂-alkyl substitution which is present in an amount of 2.5 to 6.0 wt.-% and wherein the molecular weight (without substitution) is M_{W} 12 000 to 24 000.

4. Hydrophobically modified cellulose derivative according to claim 1, wherein the hydrophobically modified cellulose derivative is a hydrophobically modified hydroxyethyl cellulose, wherein the hydroxyethyl MS is 3.0 to 4.0, the hydrophobe substitution is a combined C₄ and C₁₂-alkyl substitution, wherein the C₄-alkyl substitution is 0.05 to 0.10 wt.-% and the C₁₂-alkyl substitution is 3.5 to 5.5 wt.-% and wherein the molecular weight (without substitution) M_{W} is 10 000 to 20 000.

5. Aqueous protective coating composition containing a hydrophobically modified cellulose derivative according to any of claims 1 to 4 as an associative thickener.

6. Aqueous protective coating composition according to claim 5 containing additionally at least one further associative thickener.

7. Aqueous protective coating composition according to claim 6, wherein the additional associative thickener is a hydrophobically modified polyethylene glycol or an associative polyurethane thickener.

8. Aqueous protective coating composition according to any of claims 5 to 7, wherein the aqueous protective coating composition is a semi-gloss paint, a high gloss paint or an egg shell paint.

9. Aqueous protective coating composition according to any of claims 5 to 8, wherein the coating composition is based on an acrylic latex, a styrene-acrylic latex or phenyl-acrylic latex.

10. Use of an associative thickener as defined in any of claims 1 to 4 for the preparation of an aqueous protective coating composition.

11. Product coated with an aqueous protective coating composition as defined in any of claims 5 to 9.

## Patentansprüche

1. Hydrophob modifiziertes Cellulosederivat, ausgewählt aus der Gruppe, bestehend aus einer hydrophob modifizierten Hydroxyethylcellulose, einer hydrophob modifizierten Methylhydroxyethylcellulose und einer hydrophob modifizierten Ethylhydroxyethylcellulose, wobei das Molekulargewicht der Cellulosehauptkette des hydrophob modifizierten Cellulosederivats (ohne Substitution) M_{w} 5000 bis 50.000 beträgt, der Hydroxyethyl-MS 2,5 bis 5,0 beträgt, die hydrophobe Gruppe ein C₁₀-C₂₀-Alkyl allein oder in Kombination mit C₁-C₆-Alkyl ist, die Menge an C₁₀-C₂₀-Alkylsubstitution zwischen 0,3 und 6,0 Gew.-% liegt, **dadurch gekennzeichnet, daß** das Molekulargewicht und die Art und Menge der hydrophoben Substitution des hydrophob modifizierten Cellulosederivats so ausgewählt ist, daß eine Styrol/Acrylbasierende halbglänzende Anstrichfarbe, die nicht mehr als 1,5 Gew.-% des hydrophob modifizierten Cellulosederivats enthält und eine Leneta-Egalisierung von mindestens 9 aufweist, eine ICI-Viskosität von mindestens 120 mPas aufweist.

2. Hydrophob modifiziertes Cellulosederivat nach Anspruch 1, wobei das hydrophob modifizierte Cellulosederivat eine hydrophob modifizierte Hydroxyethylcellulose ist, wobei der Hydroxyethyl-MS 2,5 bis 5,0 beträgt, die hydrophobe Substitution eine C₁₆-Alkylsubstitution ist, die in einer Menge von 0,3 bis 1,0 Gew.-% vorliegt, und wobei das Molekulargewicht (ohne Substitution) M_{w} 21.000 bis 46.000 beträgt.

3. Hydrophob modifiziertes Cellulosederivat nach Anspruch 1, wobei das hydrophob modifizierte Cellulosederivat eine hydrophob modifizierte Hydroxyethylcellulose ist, wobei der Hydroxyethyl-MS 3,5 bis 4,1 beträgt, die hydrophobe Substitution eine C₁₂-Alkylsubstitution ist, die in einer Menge von 2,5 bis 6,0 Gew.-% vorliegt, und wobei das Molekulargewicht (ohne Substitution) M_{w} 12.000 bis 24.000 beträgt.

4. Hydrophob modifiziertes Cellulosederivat nach Anspruch 1, wobei das hydrophob modifizierte Cellulosederivat eine hydrophob modifizierte Hydroxyethylcellulose ist, wobei der Hydroxyethyl-MS 3,0 bis 4,0 beträgt, die hydrophobe Substitution eine kombinierte C₄- und C₁₂-Alkylsubstitution ist, wobei die C₄-Alkylsubstitution 0,05 bis 0,10 Gew.-% beträgt und die C₁₂-Alkylsubstitution 3,5 bis 5,5 Gew.-% beträgt, und wobei das Molekulargewicht (ohne Substitution) M_{w} 10.000 bis 20.000 beträgt.

5. Wässerige Schutzschichtzusammensetzung, enthaltend ein hydrophob modifiziertes Cellulosederivat nach einem der Ansprüche 1 bis 4 als ein assoziatives Verdickungsmittel.

6. Wässerige Schutzschichtzusammensetzung nach Anspruch 5, enthaltend zusätzlich mindestens ein weiteres assoziatives Verdickungsmittel.

7. Wässerige Schutzschichtzusammensetzung nach Anspruch 6, wobei das zusätzliche assoziative Verdickungsmittel ein hydrophob modifiziertes Polyethylenglykol oder ein assoziatives Polyurethanverdickungsmittel ist.

8. Wässerige Schutzschichtzusammensetzung nach einem der Ansprüche 5 bis 7, wobei die wässerige Schutzschichtzusammensetzung eine halbglänzende Anstrichfarbe, eine hochglänzende Anstrichfarbe oder eine Eierschalenanstrichfarbe ist.

9. Wässerige Schutzschichtzusammensetzung nach einem der Ansprüche 5 bis 8, wobei die Beschichtungszusammensetzung auf einem Acryllatex, einem Styrol-Acryl-Latex oder Phenyl-Acryl-Latex basiert.

10. Verwendung eines assoziativen Verdickungsmittels nach einem der Ansprüche 1 bis 4 zur Herstellung einer wässerigen Schutzschichtzusammensetzung.

11. Produkt, beschichtet mit einer wässerigen Schutzschichtzusammensetzung nach einem der Ansprüche 5 bis 9.

## Revendications

1. Dérivé cellulosique modifié hydrophobiquement choisi dans le groupe comprenant une hydroxyéthyl cellulose modifiée hydrophobiquement, une méthylhydroxyéthyl cellulose modifiée hydrophobiquement et une éthylhydroxyéthyl cellulose modifiée hydrophobiquement, dans lequel le poids moléculaire de la colonne vertébrale cellulosique du dérivé cellulosique modifié hydrophobiquement (sans substitution) M_{w} est de 5.000 à 50.000, le MS d'hydroxyéthyle est de 2,5 à 5,0, la partie hydrophobe est un alkyle en C₁₀-C₂₀ seul ou en combinaison à un alkyle en C₁-C₆, la quantité de substitution alkyle en C₁₀-C₂₀ se situe entre 0,3 et 6,0% en poids, **caractérisé en ce que** le poids moléculaire et le type et la quantité de substitution hydrophobe du dérivé cellulosique modifié hydrophobiquement sont choisis de telle sorte qu'une peinture semi-brillante à base de styrène/acrylique ne contenant pas plus de 1,5% en poids du dérivé cellulosique modifié hydrophobiquement et ayant un étalement leneta d'au moins 9 ait une viscosité ICI d'au moins 120 mPas.

2. Dérivé cellulosique modifié hydrophobiquement suivant la revendication 1, dans lequel le dérivé cellulosique modifié hydrophobiquement est une hydroxyéthyl cellulose modifiée hydrophobiquement, dans laquelle le MS d'hydroxyéthyle est de 2,5 à 5,0, la substitution hydrophobe est une substitution alkyle en C₁₆ qui est présente en une quantité de 0,3 à 1,0% en poids et dans laquelle le poids moléculaire M_{w} (sans substitution) est de 21.000 à 46.000.

3. Dérivé cellulosique modifié hydrophobiquement suivant la revendication 1, dans lequel le dérivé cellulosique modifié hydrophobiquement est une hydroxyéthyl cellulose modifiée hydrophobiquement, dans laquelle le MS d'hydroxyéthyle est de 3,5 à 4,1, la substitution hydrophobe est une substitution alkyle en C₁₂ qui est présente en une quantité de 2,5 à 6,0% en poids et dans laquelle le poids moléculaire M_{w} (sans substitution) est de 12.000 à 24.000.

4. Dérivé cellulosique modifié hydrophobiquement suivant la revendication 1, dans lequel le dérivé cellulosique modifié hydrophobiquement est une hydroxyéthyl cellulose modifiée hydrophobiquement, dans laquelle le MS d'hydroxyéthyle est de 3,0 à 4,0, la substitution hydrophobe est une substitution alkyle en C₄ et C₁₂ combinée, dans laquelle la substitution en C₄ est de 0,05 à 0,10% en poids et la substitution alkyle en C₁₂ est de 3,5 à 5,5% en poids et dans laquelle le poids moléculaire M_{w} (sans substitution) est de 10.000 à 20.000.

5. Composition de revêtement protectrice aqueuse contenant un dérivé cellulosique modifié hydrophobiquement suivant l'une quelconque des revendications 1 à 4 comme épaississant associatif.

6. Composition de revêtement protectrice aqueuse suivant la revendication 5, contenant de plus au moins un autre épaississant associatif.

7. Composition de revêtement protectrice aqueuse suivant la revendication 6, dans laquelle l'épaississant associatif additionnel est un polyéthylène glycol modifié hydrophobiquement ou un épaississant de polyuréthanne associatif.

8. Composition de revêtement protectrice aqueuse suivant l'une quelconque des revendications 5 à 7, dans laquelle la composition de revêtement protectrice aqueuse est une peinture semi-brillante, une peinture de brillant élevé ou un peinture coquille d'oeuf.

9. Composition de revêtement protectrice aqueuse suivant l'une quelconque des revendications 5 à 8, dans laquelle la composition de revêtement est à base d'un latex acrylique, d'un latex de styrène-acrylique ou de latex phényl-acrylique.

10. Utilisation d'un épaississant associatif suivant l'une quelconque des revendications 1 à 4 pour la préparation d'une composition de revêtement protectrice aqueuse.

11. Produit revêtu d'une composition de revêtement protectrice aqueuse suivant l'une quelconque des revendications 5 à 9.
